# EUROPEAN PATENT SPECIFICATION

(11) **EP 0 872 325 B1**
(45) Date of publication and mention of the grant of the patent: **24.07.2002**
(21) Application number: 97890070.2
(22) Date of filing: 17.04.1997
(51) Int. Cl.: B29C 45/26

(54) **Stamper holder for automatic change-over**
Aufspannvorrichtung einer Matrize für automatische Umschaltung
Dispositif de fixation d'une matrice pour changement automatique

(43) Date of publication of application: 21.10.1998
(73) Proprietor: Sony DADC Austria AG, 5081 Anif (AT)
(72) Inventor: Bidner, Klaus, 5020 Salzburg/Austria (AT)
(74) Representative: Kliment, Peter

(56) References cited:
- EP-A- 0 268 291
- GB-A- 2 198 985
- PATENT ABSTRACTS OF JAPAN vol. 18, no. 496 (M-1674), 16 September 1994 & JP 06 166062 A (NIIGATA ENG CO LTD), 14 June 1994,
- PATENT ABSTRACTS OF JAPAN vol. 14, no. 291 (M-989) [4234] , 22 June 1990 & JP 02 092608 A (SUMITOMO HEAVY IND LTD), 3 April 1990,
- PATENT ABSTRACTS OF JAPAN vol. 15, no. 69 (M-1083), 19 February 1991 & JP 02 295725 A (SEIKO GIKEN:KK), 6 December 1990,
- PATENT ABSTRACTS OF JAPAN vol. 18, no. 65 (M-1554), 3 February 1994 & JP 05 285987 A (TEKUNOPURASU:KK), 2 November 1993,

## Description

The invention relates to an injection mould for forming an optical data storage disc according the preamble of the claim 1.

In today's mass-production the ability to change the order is a demand of increasing interest. In case of production of optical data storage discs a change of order is connected with a stamper change. The stamper carries the data to be stored on the optical data storage discs. To realise flexibility in mass-production of optical storage discs, automatic stamper changers were developed. These stamper changers are based on the fact, that the stamper is held in the mould completely by vacuum or partly by vacuum and partly mechanically.

The today's standard of automatic stamper changer is based on these typical kinds of fixing a stamper in a mould. However, a disadvantage of a stamper fixing completely or partly by vacuum are the very small tolerances in the flatness of the stampers. This makes the stamper production more difficult. Additionally a mechanical fixing of the stamper is much more safe than a fixing completely by vacuum.

To avoid this disadvantages stampers are fixed in the mould also today completely mechanically.

Known injection moulds according the preamble of the claim 1 having a stamper holder provided with an outwardly mounting flange. Said flange is passed through by screws running in the axial direction of the through bore of the stamper holder and engaging into one half of the mould only.

Due to said screws, such a construction makes an automatic stamper change nearly impossible and a change of the stamper is therefor an operation consuming much time and reduces the productivity. Further a change of the stamper by hand increases the error rate due to mishandling the stamper as there is the danger of the application of finger prints or scratches at the stamper or the mirrors of the mould halves. Additionally the set up time is increased in case of a stamper change made by hand compared with an automatic stamper change, as in the case of a manually change an adjustment of the injection moulding machine after a stamper change is necessary, which is not the case after an automatic stamper change.

It is an object of the invention to propose an injection mould as mentioned in the preamble of the claim 1, allowing an automatic change of an completely mechanically held stamper.

This is achieved by an injection mould according the preamble of the claim 1 showing the characterising features of said claim.

Said arrangement allows an automatic stamper change, whereby the bolt guided in said half of the mould provided with the central clamp is retracted and the stamper holder is held by the bolt guided in the other half. So the mould can be opened, whereby the stamper holder is connected to the half having the injection nozzle, whereas during normal operation the stamper holder is connected to the other half having the central clamp. Now the stamper can be easily changed.

After closing the mould with a new stamper the bolt guided in the half opposite the half having the injection nozzle is inserted into the corresponding recess of the stamper holder and the bolt guided in the half of the mould having the injection nozzle being retracted. Now the mould can be operated in a normal way. During normal operation the bolt guided in the half having the injection nozzle remains retracted and guided in the other half remains in the corresponding recess till a further change of the stamper takes place.

As the stamper holder cannot be turned against one of the haves of the mould it is not necessary to adjust it after changing a stamper.

The features of the claim 2 makes it possible to limit an inclination against a horizontal plane of the axis of the bolt guided in the half having the injection nozzle to a less extend or to avoid such an inclination.

With the features of the claim 3 the advantage of an easy manufacture of the stamper holder is achieved.

To distribute the necessary holding forces in an uniform manner it is advantageous to provide the features of the claim 4.

The features of the claim 5 makes the insertion of the bolts into the recesses of the stamper holder more easy.

The invention is explained in more detail with regard to the accompanying drawings.
Fig. 1. shows a cross section of a mould according the invention in a closed position, immediately prior a change of the stamper,
Fig. 2 shows a cross section of the mould according Fig. 1 during changing a stamper.

The mould according to the invention comprises two halves 1, 2 one of them being moveable in an axial direction, whereas the other one is fixed. Preferably the half 1, bearing an injection nozzle 18 is fixed.

A mirror 16 is held in said half 1 and a mirror ring 12 is attached to said mirror to limit a cavity 21. Said cavity is further limited by the mirror 16 and a bushing 17 held in said mirror 16 and being provided with the injection nozzle 18 as well as by a stamper 3 carrying the data to be stored on an optical data disc to be moulded within said cavity 21. Adjusting screws 13 are screwed into said mirror ring 12, used as a stop gauge for a stamper holder 5.

Said mirror ring 12 is mounted within a ring 8 held in the half 1. At the outer generated surface of the half 1 actuating means, e.g. pneumatic cylinders 15 are attached to move bolts 14. Said bolts are regularly displaced over the entire circumference of the half 1 and are guided in bores 9 passing in a radial plane through the half 1 and the ring 8. Said bolts 14 cooperate with a recess 20, built by a groove running in the circumferential direction of the stamp holder 5. The side walls of said groove 20 diverge toward the outer rims of said groove 20 and the end portion of the bolts 14 are provided with correspondingly inclined surfaces.

The moveable half 2 is provided with a mirror 22 having a plane surface at which the stamper 3 rests. A central clamping 4 is inserted into a central bore of the mirror 22 and the stamper holder 5 surrounds the mirror 22 and is guided by its outer generated surface and is axially moveable along the mirror 22.

Said stamper holder 5 is further guided within a ring 6 fastend to the half 2.

At the outer generated surface of the half 2 actuator means 11 are attached to move further bolts 10 guided in radial planes within bores 7 passing through the half 1 and said ring 6.

Said stamper holder 5 being provided with a further recess 19, built by a groove running also in the circumferential direction. Said groove 19 having outwardly diverging side walls, as is the case with the axially displaced groove 20 and the end portions of the bolts 10 are provided with correspondingly inclined surfaces.

During a typical injection moulding cycle a plastizised material is injected into the cavity 21 via the injection nozzle 18. During injection of the material the stamper is fixed between the mirror 22 and the inwardly directed flange 23 of the stamper holder 5 and the stamper holder 5 is fixed with the bolts 10, whereby the mould is closed. The bolts 14, guided in the half 1 of the mould are retracted during the normal operation.

To eject the moulded optical disc the bolts 15 are retracted by the actuator means 15 and the moveable half 2 is moved away from the stationary half 1. During opening the mould the bolts 10 remains within the recess 19 of the stamp holder 5 to maintain the fixing of the stamper 3.

After closing the mould a further injection moulding cycle can be started.

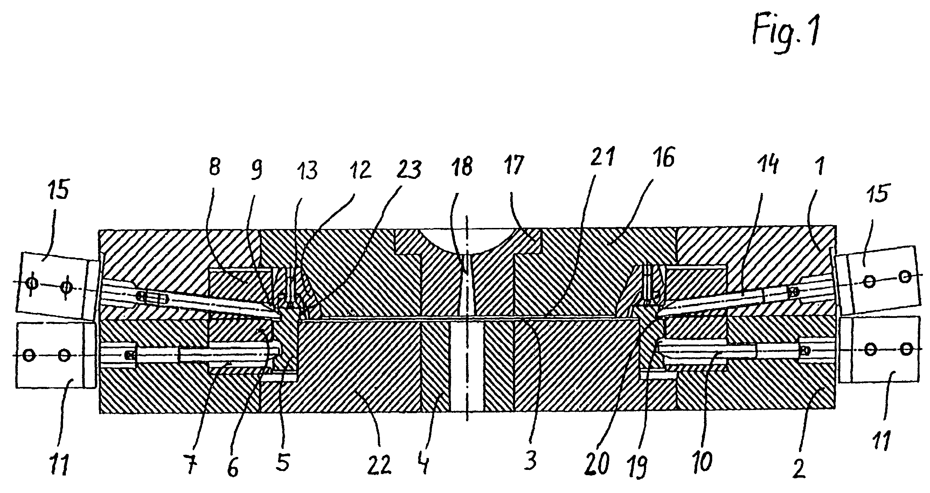

To change the stamper 3 the mould is closed after ejecting the moulded optical disc and the bolts 14 are inserted into the recess 20 of the stamp holder 5 (see Fig. 1). Now the bolts 10 are retracted whereas the bolts 14 remain within the recess 20.

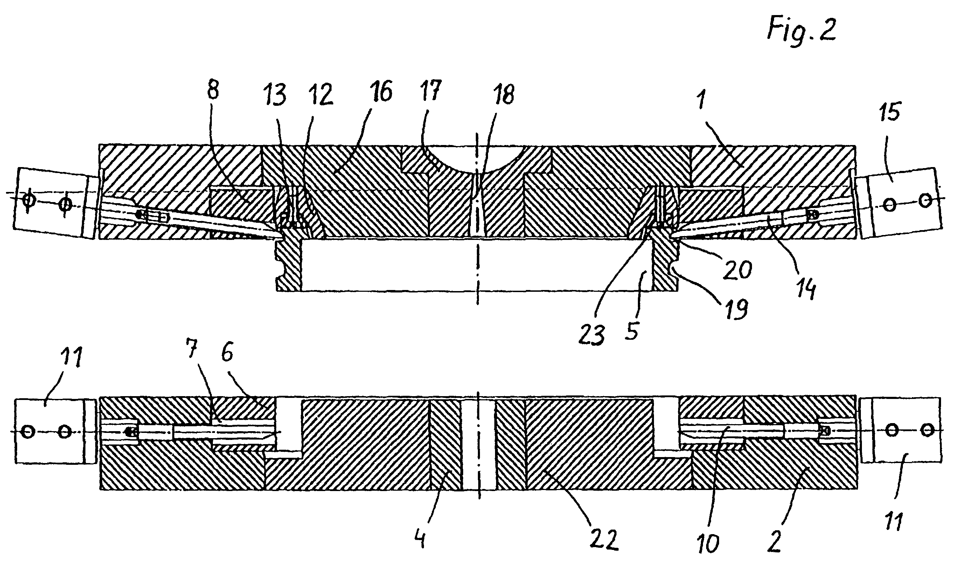

After opening the mould the stamper holder 5 remains connected to the half 1 of the mould and the stamper 3 lays free at the mirror 22 and can be replaced by a new stamper 3 (Fig. 2). After closing the mould the bolts 10 are pushed into the recess 19 of the stamper holder 5 and the bolts 14 are retracted. A new injection moulding cycle can be started now with the new stamper 3.

## Claims

1. Injection mould for forming an optical data storage disc, said mould having two halves (1, 2) moveable one against another, the mould being provided with a stamper holder (5), comprising a body having a through bore and an inwardly directed flange used as a stop for an exchangeably held stamper (3), said stamper (3) having a complementary pattern of the data to be stored at the optical storage disc to be manufactured, and with a centre clamp (4) for holding said stamper (3) in the central region, one half (1) being provided with a mirror ring (7), limiting a cavity in co-operation with the stamper (3) and a mirror (16) bearing said mirror ring (7), when said mould is closed, and with an injection nozzle (18), **characterised in that** at least two axially moveable bolts (10, 14) are provided, said bolts (10, 14) are guided in different halves (1, 2) in a plane running essentially in a radial direction and said stamper holder (5) being provided with at least one recess (19, 20) at its outer generated surface, provided to receive said bolts (10, 14), whereby said stamper holder (5) is held during operation of the mould by at least said bolt(s) (10) guided **in that** half (2) opposite said injection nozzle (18).

2. Mould according claim 1, **characterized in that** at least two axially displaced recesses (19, 20) are provided at the outer generated surface of said stamp holder (5).

3. Mould according claim 1 or 2, **characterised in that** the recesses (9, 20) of the stamper holder (5) are built by grooves running in the circumferential direction of the stamp holder (5).

4. Mould according one of the claims 1 to 3, characerised in that each half of the mould (1, 2) being provided with three bolts (10, 14) regularly displaced over the entire circumference of the stamper holder (5).

5. Mould according one of the claims 1 to 4, **characterised in that** said recesses of the outer generated surface of the stamper holder (5) having outwardly diverging side walls in diametrical cross section and the bolts (10, 14) are provided with correspondingly shaped end regions co-operating with said recesses.

## Patentansprüche

1. Spritzgussform zur Formung einer optischen Datenspeicherplatte, wobei die Gussform zwei Hälften (1, 2) aufweist, die gegeneinander beweglich sind und die Gussform des weiteren mit einer Matrizenhalterung (5) versehen ist, die einen Körper aufweist, welcher eine Durchbohrung und einen einwärts gerichteten Flansch aufweist, der als Anschlag für eine austauschbar befestigte Matrize (3) dient, wobei die Matrize (3) ein komplementäres Muster der auf der herzustellenden optischen Datenspeicherplatte zu speichernden Daten aufweist, und wobei die Gussform des weiteren mit einer Mittelpunkts-Klemmvorrichtung (4) zum Halten der Matrize (3) im Mittelbereich versehen ist, und wobei eine Hälfte (1) mit einem Spiegelring (7) ausgestattet ist, der zusammen mit der Matrize (3) und einem den Spiegelring (7) tragenden Spiegel (16) eine Vertiefung begrenzt, wenn die Gussform geschlossen ist, und des weiteren mit einer Spritzdüse (18), **dadurch gekennzeichnet, dass** mindestens zwei axial bewegliche Bolzen (10, 14) vorgesehen sind, wobei die Bolzen (10, 14) in unterschiedlichen Hälften (1, 2) in einer Ebene geführt werden, die im wesentlichen in radialer Richtung verläuft, und wobei die Matrizenhalterung (5) mit mindestens einer Vertiefung (19, 20) an ihrer außen generierten Oberfläche versehen ist, die dazu vorgesehen sind die Bolzen (10, 14) aufzunehmen, wobei die Matrizenhalterung (5) während des Betriebs die Gussform mindestens von dem (den) Bolzen (10) gehalten wird, der (die) in dieser Hälfte (2) gegenüber der Spritzdüse (18) geführt wird (werden).

2. Spritzgussform nach Anspruch 1, **dadurch gekennzeichnet, dass** mindestens zwei axial versetzte Vertiefungen (19, 20) an der außen generierten Oberfläche der Matrizenhalterung (5) vorgesehen sind.

3. Spritzgussform nach Anspruch 1 oder 2, **dadurch gekennzeichnet, dass** die Vertiefungen (19, 20) der Matrizenhalterung (5) durch Rinnen geschaffen sind, die in umfänglicher Richtung der Matrizenhalterung (5) verlaufen.

4. Spritzgussform nach einem der Ansprüche 1 bis 3, **dadurch gekennzeichnet, dass** jede Hälfte der Gussform (1, 2) mit drei Bolzen (10, 14) versehen ist, die regelmäßig über den gesamten Umfang der Matrizenhalterung (5) versetzt sind.

5. Spritzgussform nach einem der Ansprüche 1 bis 4, **dadurch gekennzeichnet, dass** die Vertiefungen der außen generierten Oberfläche der Matrizenhalterung (5) auswärts divergierende Seitenwände im Diametralquerschnitt aufweisen und die Bolzen (10, 14) mit entsprechend geformten Endbereichen versehen sind, die mit den Aussparungen zusammen wirksam werden.

## Revendications

1. Moule d'injection pour la fabrication d'un disque optique pour le stockage de données, ledit moule ayant deux moitiés (1, 2) mobiles l'une par rapport à l'autre, le moule étant pourvu d'un porte-matrice (5) comprenant un corps muni d'un alésage traversant et d'un rebord incliné vers l'intérieur et servant d'arrêt pour une matrice (3) échangeable, ladite matrice (3) ayant un modèle complémentaire des données destinées à être stockées sur le disque optique à fabriquer, d'une bride centrale (4) pour maintenir la matrice (3) dans la région centrale, l'une des moitiés (1) ayant un anneau de miroir (7) qui délimite une cavité en coopération avec la matrice (3) et un miroir (16) supportant ledit anneau de miroir (7) lorsque le moule est fermé, et d'une buse d'injection (18), **caractérisé en ce que** au moins deux boulons (10, 14) mobiles dans la direction axiale sont prévus, lesdits boulons (10, 14) étant guidés chacun dans une autre moitié (1, 2) dans un plan essentiellement radial et ledit porte-matrice (5) étant pourvu, sur sa surface extérieure, d'au moins une découpe (19, 20) destinée à recevoir lesdits boulons (10, 14), ledit porte-matrice (5) étant maintenu, pendant l'utilisation du moule, par au moins le(s)dit(s) boulon(s) (10) guidé(s) dans la moitié (2) disposée en regard de la buse d'injection (18).

2. Moule selon la revendication 1, **caractérisé en ce que** au moins deux découpes (19, 20), désaxées l'une par rapport à l'autre, sont prévues sur la surface extérieure dudit porte-matrice (5).

3. Moule selon la revendication 1 ou 2, **caractérisé en ce que** les découpes (19, 20) du porte-matrice (5) sont formées par des rainures pratiquées dans la direction circonférentielle du porte-matrice (5).

4. Moule selon l'une des revendications 1 à 3, **caractérisé en ce que** chaque moitié de moule (1, 2) est pourvue de trois boulons (10, 14) régulièrement espacés sur toute la circonférence du porte-matrice (5).

5. Moule selon l'une des revendications 1 à 4, **caractérisé en ce que** lesdites découpes de la surface extérieure du porte-matrice (5) ont des parois latérales inclinées vers l'extérieur en section diamétrale et que les boulons (10, 14) sont munis d'extrémités qui ont une forme correspondante et coopèrent avec lesdites découpes.
